# EUROPÄISCHE PATENTSCHRIFT

(11) **EP 0 831 605 B1**
(45) Veröffentlichungstag und Bekanntmachung des Hinweises auf die Patenterteilung: **05.11.2003**
(21) Anmeldenummer: 97113597.5
(22) Anmeldetag: 06.08.1997
(51) Int. Cl.: H04B 10/158

(54) **Optischer Empfänger mit grossem Dynamikbereich**
Optical receiver with wide dynamic range
Récepteur optique à grande dynamique

(30) Priorität: 19.09.1996 DE 19638440
(43) Veröffentlichungstag der Anmeldung: 25.03.1998
(73) Patentinhaber: SIEMENS AKTIENGESELLSCHAFT, 80333 München (DE)
(72) Erfinder: Fütterer, Augustin, Dipl.-Ing., 85386 Eching (DE); Thanhäuser, Gerhard, Dipl.-Ing., 86415 Mering (DE)

(56) Entgegenhaltungen:
- EP-A- 0 344 091
- EP-A- 0 643 496
- DE-A- 3 633 984

## Beschreibung

Die Erfindung betrifft einen optischen Empfänger nach dem Oberbegriff des Anspruchs 1.

Für den Empfang von optischen Binärsignalen geeignete Empfänger sollen eine hohe Eingangsempfindlichkeit aufweisen, aber auch gute Großsignaleigenschaften (Optical Overload Range) haben.

In der europäischen Patentanmeldung 0 643 496 A1 ist ein optischer Empfänger mit einem Transimpedanzverstärker beschrieben. Transimpedanzverstärker sind in "Halbleiterschaltungstechnik" von Tietze und Schenk, Springer Verlag, 9. Auflage, Seite 504 bis 507 beschrieben. Die Verwendung von Transimpedanzverstärker mit veränderbaren Transimpedanzwiderständen zur automatischen Verstärkungsregelung zur Verstärkungsregelung ist für diesen Anwendungsfall zu kostspielig.

Bei der bekannten Schaltung ist außer einer Fotodiode eine Schottkydiode an den Eingang des Transimpedanzverstärkers angeschaltet, die bei kleinen optischen Eingangslichtleistungen gesperrt ist und keinen zusätzlichen Rauschstrom erzeugt. Mit steigender Eingangslichtleistung wird die Diode vom Verstärkerausgang her leitend gesteuert und begrenzt hierdurch die Eingangsspannung.

Mit dieser Schaltung können aber höhere Eingangswerte der Lichtleistung von > - 3 dBm nicht erreicht werden. Außerdem ist diese Schaltung zur Verwendung mit Differenzverstärkern nur eingeschränkt möglich. Außerdem kann dies Schaltungsprinzip nur eingeschränkt mit Differenzverstärkern realisiert werden.

Weitere optische Empfänger sind aus DE 3 633 984 und EP 0 344 091 bekannt.

Aufgabe der Erfindung ist es, einen optischen Empfänger anzugeben, der auch für größere Eingangssignale verwendet werden kann.

Diese Aufgabe wird durch den im Anspruch 1 angegebenen optischen Empfänger gelöst.

Ein besondere Vorteil liegt in dem vergrößerten Dynamikbereich. Es werden Werte von über 1 dBm bei hervorragender Temperaturstabilität erreicht.

Ein weiterer Vorteil ist das günstige Rauschverhalten der Schaltung. Durch die Parallelschaltung eines Koppelkondensators zum Koppelwiderstand wird die Widerstandsrauschspannung kurzgeschlossen.

Vorteilhafte Weiterbildungen der Erfindung sind in den Unteransprüchen angegeben.

Die Erfindung wird im folgenden anhand zweier Ausführungsbeispiele näher erläutert.

Dabei zeigt
- Fig. 1: einen erfindungsgemäßen optischen Empfänger und
- Fig. 2: den optischen Empfänger mit einer Variante der Referenzspannungserzeugung.

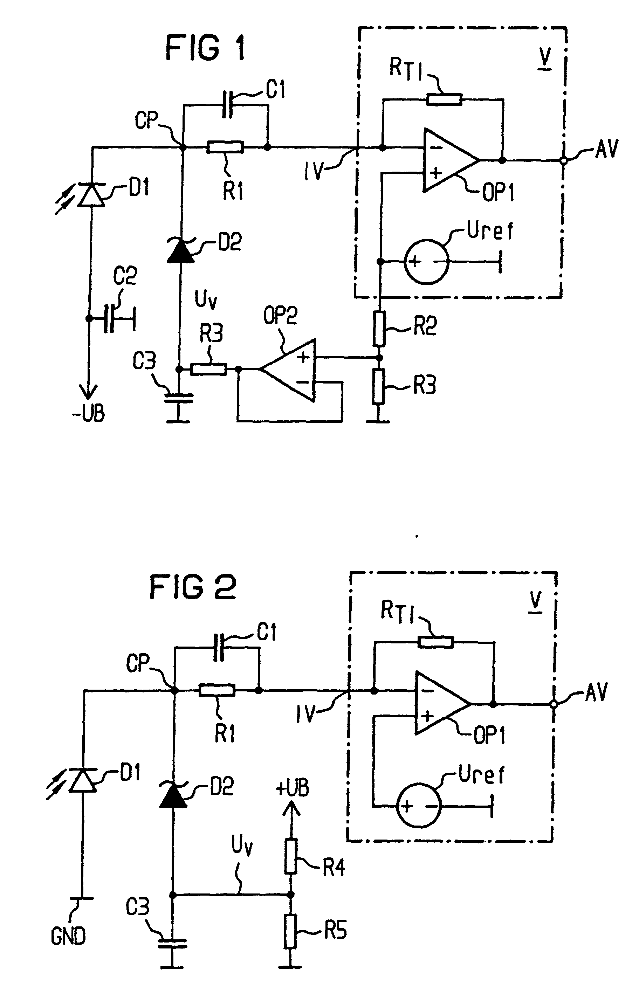

Der in Figur 1 dargestellte optische Empfänger enthält einen breitbandigen Verstärker V, der durch einen rückgekoppelten Differenzverstärker OP1 realisiert ist. Diese Schaltung wird häufig auch als Transimpedanzverstärker bezeichnet und der Rückkopplungswiderstand als Transimpedanzwiderstand R_{TI}. Besonders geeignet sind auch die Transimpedanzverstärker im engeren Sinn (wie in dem eingangs erwähnten Buch beschrieben), die eine optimale Bandbreite aufweisen.

Als optoelektrischer Wandler wird eine Fotodiode D1 verwendet; eine PIN-Fotodiode ist besonders geeignet. Die Fotodiode ist über einen komplexen Widerstand R1, C1 an den Eingang IV des Verstärkers V angeschaltet. Der komplexe Widerstand weist einen geringen Wechselstromwiderstand und einen hohen Gleichstromwiderstand auf. Er besteht aus der Parallelschaltung eines ohmschen Koppelwiderstandes R1 mit einem Koppelkondensator C1. Der Kondensator ist so dimensioniert, daß die längsten vorkommenden Dauerzustände des Empfangssignals übertragen werden können. Das vom Koppelwiderstand erzeugte Rauschen wird vom Kondensator kurzgeschlossen und verschlechtert daher nicht die Eingangsempfindlichkeit.

An den Verbindungspunkt CP des komplexen Koppelwiderstandes und der Fotodiode D1 ist eine weitere Diode, die Begrenzerdiode D2, mit ihrem gleichwirkendem Anschluß (Kathode) angeschaltet, die bei fehlendem und kleinem Eingangssignal gesperrt ist. Dies wird durch eine Vorspannung Uv erreicht, die über einen Spannungsteiler R1, R2 aus der Referenzspannung Uref des Verstärkers gewonnen wird, die am zweiten Eingang des Differenzverstärkers OP1 anliegt. Mit zunehmender Eingangslichtleistung nimmt auch die Gleichspannung am Koppelwiderstand R1 zu, bis die Begrenzerdiode D2 in den leitenden Zustand kommt und sowohl den Gleichstrom- als auch den Wechselstromanteil des Fotostromes der Fotodiode D1 übernimmt. Bei Eingangssignalen mit hohen Bitraten sind Schottkydioden besonders geeignet.

Der Koppelwiderstandes R1 hat den zwei- bis circa zehnfachen Wert des Transimpedanzwiderstandes R_{TI} (Rückkopplungswiderstand). Die Gleichspannungsverstärkung ist daher gering(< 0,5, vorzugsweise 0,2 ....0,1). Der Verstärker wird also im wesentlichen nur mit dem Wechselstromanteil angesteuert, da der Gleichstromanteil aufgrund des relativ hochohmigen Widerstandes R1 vernachlässigt werden kann. Deshalb wird der Arbeitspunkt des Verstärkers praktisch nicht verschoben.

Bei größeren Eingangssignalen ändert sich folglich die Spannung am Koppelwiderstand R1 aufgrund des Widerstandsverhältnisses R1 zu R_{TI} stärker als am Verstärkerausgang AV und die Begrenzerdiode D2 wird durch die Spannung am Koppelwiderstand R1 leitend gesteuert bevor sich die Ausgangsspannung des Verstärkers erkennbar ändert. Die Gleichspannung am Verbindungspunkt CP und damit der Arbeitspunkt der Fotodiode stellt sich entsprechend der Durchlaßspannung der Begrenzerdiode ein.

Die Vorspannung der Begrenzerdiode D2 wird so gewählt, daß sie bei niedrigen optischen Eingangspegeln eindeutig in Sperrichtung betrieben wird. Das Vorspannungspotential Uv und damit der Arbeitspunkt kann über einen Spannungsteiler und einen Spannungsfolger OP2 aus der Referenzspannung Uref des Verstärkers V abgeleitet werden (sie kann auch dem Bezugspotential entsprechen). Die Vorspannung Uv und die Größe des Koppelwiderstandes R1 bestimmen den Einsatzpunkt, an dem die Begrenzerdiode D2 leitend wird.

Wichtig ist, daß der nicht auf dem Verbindungspunkt CP geführte Anschluß der Begrenzerdiode sowohl für hohe als auch für relativ niedrige Frequenzen geerdet ist (> 200 nF für Eingangsbitraten von 150 MBit/s). Als Begrenzerdiode wird vorteilhafterweise eine Schottky-Diode verwendet, die sich für hohe Frequenzen besonders eignet.

Für eine gute wechselspannungsmäßige Verbindung mit dem Bezugspotential der an eine negative Betriebsspannung -UB geführten Anode der Fotodiode sorgt ebenfalls ein Kondensator C2.
Um das durch den Verstärker verursachte Rauschen gering zu halten, sollte der Transimpedanzwiderstand relativ hochohmig sein und Werte zwischen 10 und 100 kΩ aufweisen.

In Figur 2 ist eine Variante des optischen Empfängers dargestellt, bei der die Vergleichspannung Uv direkt über einen relativ niederohmigen Spannungsteiler R4, R5 aus der Betriebsspannung +UB abgeleitet wird. Der nicht auf den Verbindungspunkt geführte Anschluß der Fotodiode D1 ist hier direkt mit Masse GND verbunden.

## Patentansprüche

1. Optischer Empfänger mit einer Reihenschaltung eines optoelekrischen Wandlers (D1) und einer bei größeren Eingangslichtleistungen wirksamen Begrenzerdiode (D2), deren gemeinsamer Verbindungspunkt (CP) an den Eingang (IV) eines Verstärkers (V) geführt ist,
**dadurch gekennzeichnet,**
**daß** der Verbindungspunkt (CP) über einen komplexen Koppelwiderstand (R1, C1) mit dem Eingang (IV) des Verstärkers (V) verbunden ist und
**daß** der nicht an den Verbindungspunkt geführte Anschluß der Begrenzerdiode (D2) an einem festen Vorspannungspotential (Uv) liegt.

2. Optischer Empfänger nach Anspruch 1,
**dadurch gekennzeichnet,**
**daß** als komplexer Koppelwiderstand die Parallelschaltung eines Koppelwiderstandes (R1) und eines Koppelkondensators (C1) vorgesehen ist.

3. Optischer Empfänger nach Anspruch 1 oder 2,
**dadurch gekennzeichnet,**
**daß** das Verhältnis des Koppelwiderstandes (R1) zum Gegenkopplungswiderstand (R_{TI}) des Verstärkers größer als 2 ist.

4. Optischer Empfänger nach einem der vorhergehenden Ansprüche,
**dadurch gekennzeichnet,**
**daß** an den nicht als Signaleingang genutzten Differenzeingang (+) des Verstärkers (V) ein Spannungsteiler (R2, R3) angeschaltet ist, der die Vorspannung (Uv) für die Begrenzerdiode (D2) erzeugt.

5. Optischer Empfänger nach einem der vorhergehenden Ansprüche,
**dadurch gekennzeichnet,**
**daß** der nicht an den Verbindungspunkt (CP) geführte Anschluß der Begrenzerdiode (D2) durch einen Abblockkondensator (C3) mit dem Bezugspotential (GND) verbunden ist.

6. Optischer Empfänger nach einem der vorhergehenden Ansprüche,
**dadurch gekennzeichnet,**
**daß** als Begrenzerdiode (D2) eine Schottkydiode vorgesehen ist.

7. Optischer Empfänger nach einem der vorhergehenden Ansprüche,
**dadurch gekennzeichnet,**
**daß** als optoelektronischer Wandler (D1) eine PIN-Fotodiode vorgesehen ist.

## Claims

1. Optical receiver having a series circuit formed by an optoelectrical transducer (D1) and a limiter diode (D2) active at relatively large input light powers, the common junction point (CP) of which is connected to the input (IV) of an amplifier (V),
**characterized**
**in that** the junction point (CP) is connected to the input (IV) of the amplifier (V) via a complex coupling impedance (R1, C1), and
**in that** that terminal of the limiter diode (D2) which is not connected to the junction point is at a fixed bias voltage potential (Uv).

2. Optical receiver according to Claim 1,
**characterized**
**in that** the parallel circuit formed by a coupling resistor (R1) and coupling capacitor (C1) is provided as complex coupling impedance.

3. Optical receiver according to Claim 1 or 2,
**characterized**
**in that** the ratio of the coupling resistor (R1) to the negative feedback resistor (R_{TI}) of the amplifier is greater than 2.

4. Optical receiver according to one of the preceding claims,
**characterized**
**in that** a voltage divider (R2, R3), which generates the bias voltage (Uv) for the limiter diode (D2), is connected to the differential input (+) of the amplifier (B), which input is not utilised as a signal input.

5. Optical receiver according to one of the preceding claims,
**characterized**
**in that** that terminal of the limiter diode (D2) which is not connected to the junction point (CP) is connected to the reference-earth potential (GND) by a blocking capacitor (C3).

6. Optical receiver according to one of the preceding claims,
**characterized**
**in that** a Schottky diode is provided as the limiter diode (D2).

7. Optical receiver according to one of the preceding claims,
**characterized**
**in that** a PIN photodiode is provided as the optoelectronic transducer (D1).

## Revendications

1. Récepteur optique comprenant un montage en série d'un transducteur optoélectrique (D1) et une diode limiteuse (D2) efficace en cas de puissances de lumière d'entrée importantes, dont le point de liaison (CP) commun est mené à l'entrée d'un amplificateur (V),
**caractérisé en ce que**
le point de liaison (CP) est raccordé à l'entrée (IV) de l'amplificateur (V) par l'intermédiaire d'une résistance de couplage complexe (R1, C1) et
**en ce que** le raccord de la diode limiteuse (D2) non mené au point de liaison est raccordé à un potentiel fixe de prétension (Uv).

2. Récepteur optique selon la revendication 1,
**caractérisé en ce que** le montage en parallèle d'une résistance de couplage (R1) et d'un condensateur de couplage (C1) est prévu comme résistance de couplage complexe.

3. Récepteur optique selon la revendication 1 ou 2,
**caractérisé en ce que**
le rapport entre la résistance de couplage (R1) et la résistance de contre-couplage (R_{TI}) de l'amplificateur est supérieur à 2.

4. Récepteur optique selon l'une quelconque des revendications précédentes,
**caractérisé en ce que**
un diviseur de tension (R2, 3) est raccordé sur l'entrée différentielle (+) de l'amplificateur (V) non utilisée comme entrée de signal, ce diviseur de tension produisant la prétension (Uv) pour la diode limiteuse (D2).

5. Récepteur optique selon l'une des revendications précédentes,
**caractérisé en ce que**
le raccord de la diode limiteuse (D2), non mené au point de raccordement (CP), est raccordé au potentiel de référence (GND) par un condensateur d'arrêt (C3).

6. Récepteur optique selon l'une quelconque des revendications précédentes
**caractérisé en ce que**
une diode à barrière de Schottky est prévue comme diode limiteuse (D2).

7. Récepteur optique selon l'une des revendications précédentes,
**caractérisé en ce que**
une photodiode du type PIN est prévue comme transducteur optoélectronique (D1).
